# EUROPÄISCHE PATENTSCHRIFT

(11) **EP 3 840 910 B1**
(45) Veröffentlichungstag und Bekanntmachung des Hinweises auf die Patenterteilung: **28.09.2022**
(21) Anmeldenummer: 20731420.4
(22) Anmeldetag: 03.06.2020
(51) Int. Cl.: B23K 26/242, B23K 101/38, B23K 103/12

(54) **VERFAHREN ZUM VERSCHWEISSEN VON LEITERSTÜCKEN IN EINER KOMPONENTE EINES ELEKTROMECHANISCHEN WANDLERS SOWIE KOMPONENTE EINES ELEKTROMECHANISCHEN WANDLERS MIT VERSCHWEISSTEN LEITERSTÜCKEN**
METHOD FOR WELDING CONDUCTOR PIECES IN A COMPONENT OF AN ELECTROMECHANICAL TRANSDUCER, AND COMPONENT OF AN ELECTROMECHANICAL TRANSDUCER COMPRISING WELDED CONDUCTOR PIECES
PROCÉDÉ DE SOUDAGE DE PIÈCES CONDUCTRICES DANS UN ÉLÉMENT CONSTITUTIF D'UN CONVERTISSEUR ÉLECTROMÉCANIQUE ET ÉLÉMENT CONSTITUTIF D'UN CONVERTISSEUR ÉLECTROMÉCANIQUE À PIÈCES CONDUCTRICES SOUDÉES

(30) Priorität: 19.07.2019 DE 102019119666
(43) Veröffentlichungstag der Anmeldung: 30.06.2021
(73) Patentinhaber: Gehring Technologies GmbH + Co. KG, 73760 Ostfildern (DE)
(72) Erfinder: BAPP, Jaro, 71272 Renningen (DE); WIENS, Andreas, 74343 Sachsenheim (DE); LOHSE, Wolfram, 73207 Plochingen (DE)
(74) Vertreter: DREISS Patentanwälte PartG mbB
(86) Internationale Anmeldenummer: PCT/EP2020/065275
(87) Internationale Veröffentlichungsnummer: WO 2021/013413

(56) Entgegenhaltungen:
- CN-C- 100 452 619
- DE-A1-102016 009 781
- JP-A- 2013 109 948
- US-A1- 2014 338 183

## Beschreibung

Bei der Fertigung von E-Motoren oder anderen elektromechanischen Wandlern (Motoren oder Generatoren) gibt es verschiedene Herstellverfahren. Eines ist das sogenannte "Hair Pin"-Verfahren, bei dem Kupferdrähte in eine vorgegebene Freiform gebogen werden und in die vorgesehenen Nuten des Stators eingeschoben werden. Die aus dem Stator herausragenden offenen Seiten der "Hair Pins" werden anschließend verdreht und nach dem elektrischen Schaltbild am freien Ende stirnseitig verschweißt.

Beim Strahlschweißen wird ein Laser- oder ein Elektronenstrahl zum Erhitzen und Schmelzen des Werkstückes verwendet. Das Schweißen erfolgt im Vakuum oder in einem Schutzgas. Der beim Laserschweißen erzeugte gebündelte Laserstrahl ist üblicherweise weniger als ein Millimeter im Durchmesser und erzeugt typischerweise sehr hohe Temperaturen. Die entstehende Schweißnaht kann dabei sehr klein ausgeführt werden.

Beim Verbinden von wicklungsbildenden Leiterstücken zur Herstellung einer Wicklungen aufweisenden Komponente (bspw. Rotor oder Stator) eines elektromechanischen Wandlers kann die Schweißnaht eine Modifikation des Leitungsquerschnitts darstellen. Möglichst sollte die Schweißnaht eine Verbindungsfläche schaffen, die im Wesentlichen dem Leitungsquerschnitt der Leiterstücke entspricht.

Die Druckschriften CN100452619C, JP2013109948A und US 2014/0338183 A1 zeigen entsprechende Vorrichtungen und Verfahren zum Verbinden von Leiterenden.

CN100452619C weist die Merkmale des Oberbegriffs der Ansprüche 1, 2 und 13 auf und JP2013109948A weist die Merkmale des Oberbegriffs von Anspruch 14, sowie Anspruch 15 auf.

Die Druckschrift DE 10 2016 009 781 A1 zeigt ein Verfahren zum Verschweißen von Bauteilen beispielsweise aus dem Karosseriebau.

Den Erfindungen (Verfahren sowie Vorrichtung) liegt die Aufgabe zugrunde Verfahren sowie eine Vorrichtung bereitzustellen, wobei bei den Verfahren zwei oder mehr Leiterstücke mit einer für die elektrische Leitfähigkeit vorteilhaften Verbindungsfläche über eine Schweißnaht miteinander verbunden werden können und wobei durch die Vorrichtung eine Wicklungen aufweisende Komponente eines elektromechanischen Wandlers bereitgestellt werden soll, die vorteilhaft ausgebildete Schweißnähte aufweist.

Dieses Problem wird erfindungsgemäß durch ein Verfahren mit den Merkmalen des Anspruchs 1 sowie durch ein Verfahren mit den Merkmalen des Anspruchs 2 sowie durch Wicklungen aufweisende Komponenten mit den Merkmalen der Ansprüche 13 bis 15 gelöst. Weiterbildungen der Erfindung sind nachfolgend und in den Unteransprüchen beschrieben.

Zur Herstellung der Verbindung zwischen zwei Leiterstücken ist erfindungsgemäß vorgesehen, dass bei einem Verfahren zur Herstellung einer Wicklungen aufweisenden Komponente eines elektromechanischen Wandlers die nachfolgend beschriebenen Schritte durchgeführt werden.

Anformen eines der freien Enden zweier wicklungsbildender Leiterstücke, die leitend miteinander zu verbinden sind. Es kann insbesondere vorgesehen sein, dass beide freien Enden angeformt werden. Mit Anformen ist eine Änderung der Form der freien Enden gemeint. Das Anformen kann durch Material Entfernung oder durch Umformen des Materials der Leiterstücke erfolgen. Eine Kombination aus beidem ist ebenso im Sinne der Erfindung.

Die Leiterstücke werden in der Komponente des elektromechanischen Wandlers angeordnet und fixiert. Die Anordnung und Fixierung erfolgt dabei in der für den Verschweißungsvorgang vorgesehenen Konfiguration bzw. geometrischen Anordnung. Nach dem Anordnen und Fixieren müssen die Leiterstücken also vor dem Verschweißen nicht mehr in ihrer Position verändert werden.

Anformen, Anordnen und Fixieren können auch in einem einzigen Arbeitsschritt durchgeführt werden. Typischerweise werden diese jedoch in einzelnen Schritten durchgeführt. Es kann vorgesehen sein, dass zunächst angeformt und dann angeordnet und fixiert wird. Im Sinne der Erfindung ist es ebenso, zunächst die Leiterstücke anzuordnen und gegebenenfalls zu fixieren und anschließend anzuformen.

Im Sinne der vorliegenden Erfindung erfolgt das Anformen, Anordnen und Fixieren derart, dass die beiden Leiterstücke in der vorgesehenen Konfiguration aneinander anliegen und zwischen den beiden Leiterstücken eine sich zu den freien Enden hin aufweitende Ausnehmung gegeben ist. Die Leiterstücken sind also wenigstens abschnittsweise in einem flächigen direkten Kontakt und im Bereich der sich aufweitenden Ausnehmung durch die Ausnehmung zueinander beabstandet.

Das erfindungsgemäße Verfahren sieht weiter das Verschweißen der beiden zu verbindenden Leiterstücke mittels eines Strahlschweißverfahrens (Elektronenstrahlschweißen oder Laserstrahlschweißen) vor.

Dabei wird der Strahl in die sich aufweitende Ausnehmung eingebracht wird. Die Einbringung des Strahls erfolgt dabei derart, dass eine leitfähige Schweißverbindung entsteht, die die beiden miteinander zu verbindenden Leiterstücke verbindet. Das Material der Leiterstücke schmilzt auf und bildet nach dem Erstarren die leitfähige Verbindung zwischen den Leiterstücken. Das Vorsehen der oben genannten Ausnehmung ermöglicht es dabei die Leiterstücke entlang ihrer länglichen Erstreckung über eine ausreichende Fläche mit dem Strahl zu beaufschlagen, um eine ausreichend Tiefe Schweißnaht zu bilden (mit "Tiefe" ist die Erstreckung der Schweißnaht bzw. Schweißverbindung in Richtung der Längserstreckung der Leiterstücke gemeint). Des Weiteren ermöglicht die Ausnehmung die Aufnahme von geschmolzenem Material der Leiterstücke.

Gegenüber einer Beaufschlagung der Leiterstücke mit dem Strahl von ihren freien Enden her, wird beim erfindungsgemäßen Verfahren ein wesentlich geringerer Energieeintrag und damit ein geringerer Anteil an aufgeschmolzenem Material benötigt, um eine Schweißnaht mit entsprechendem Querschnitt zu schaffen. Die entsprechenden Leiterstücke sind auch über eine Schweißverbindung verbunden, die im Wesentlichen "zwischen" den Leiterstücken liegt und sich nicht sozusagen auf deren freien Enden befindet. Die Schweißverbindung ist also typischer Weise zwischen nicht aufgeschmolzenem ursprünglichem Material der Leiterstücke angeordnet.

Es ist dabei vorgesehen, dass die beiden miteinander zu verbindenden Leiterstücke den gleichen Leitungsquerschnitt aufweisen. Der Leitungsquerschnitt ist dabei als die Fläche der Leiterstücke orthogonal zu ihrer Längserstreckung zu betrachten. Weiter kann vorgesehen sein, dass die leitfähige Schweißverbindung bzw. deren leitende Querschnittsfläche mindestens 80%, insbesondere 90%, insbesondere 95%, insbesondere 100%, des Leitungsquerschnitts der Leiterstücke aufweist. Die leitende Querschnittsfläche der Schweißverbindung ist dabei typischerweise als die entlang der Längserstreckung der Leiterstücke diese miteinander verbindende Querschnittsfläche zu sehen. Mit anderen Worten also quasi die Querschnittsfläche der Materialbrücke, welche die beiden Leiterstücken miteinander verbindet. Eine ausreichend dimensionierte Verbindung zwischen den Leiterstücken verhindert einen lokal zu hohen Widerstand, der zu einer Schädigung des Materials im Betrieb führen kann.

Weiter ist erfindungsgemäß vorgesehen, dass die beiden miteinander zu verbindenden Leiterstücke den gleichen Leitungsquerschnitt aufweisen und dass die leitfähige Schweißverbindung höchstens 140%, insbesondere 130%, insbesondere 120%, insbesondere 110%, des Leitungsquerschnitts der Leiterstücke aufweist. Hierdurch wird eine zu großflächige Verbindung der beiden Leiterstücke vermieden.

Wie oben bereits erläutert, so ist Gegenstand der Erfindung auch ein Verfahren zur Herstellung einer Wicklungen aufweisenden Komponente eines elektromechanischen Wandlers, bei der mehrere (also mehr als zwei) Leiterstücke miteinander zu verbinden sind. Das entsprechende Verfahren umfasst die folgenden Schritte:
Anformen freier Enden wicklungsbildender Leiterstücke, die leitend miteinander zu verbinden sind. Insbesondere kann vorgesehen sein, alle freien Enden der miteinander zu verbindenden Leiterstücke anzuformen. Mit Anformen ist dabei wie oben bereits erläutert sowohl umformen als auch Materialabtrag gemeint.

Anordnen und Fixieren der miteinander zu verbindenden Leiterstücke in der Komponente des elektromechanischen Wandlers in einer für einen Verschweißungsvorgang vorgesehenen Konfiguration. Wie oben bereits erläutert, so ist auch hier die Zusammenlegung von Anformen, Anordnen und Fixieren sowie die sequentielle Durchführung im Sinne der Erfindung.

Das Anformen und das Anordnen und Fixieren wird dabei derart durchgeführt, dass die Leiterstücke in einer vorgesehenen Reihenanordnung aneinander anliegen und zwischen benachbarten Leiterstücken eine sich zu den freien Enden hin aufweitende Ausnehmung mit einem den freien Enden abgewandten Ausnehmungsende gegeben ist. Das Ausnehmungsende bildet also quasi den "Boden" der zwischen den freien Enden durch die Ausnehmung gebildeten "Vertiefung".

In einer möglichen Verfahrensvariante ist dabei wenigstens ein Ausnehmungsende einer sich aufweitenden Ausnehmung zwischen Leiterstücken, die beidseitig mit benachbarten Leiterstücken zu verbinden (verschweißen) sind, weiter von den freien Enden der Leiterstücke entfernt angeordnet als das Ausnehmungsende einer sich aufweitenden Ausnehmung zwischen Leiterstücken von denen eines nur einseitig mit einem benachbarten Leiterstück zu verbinden ist. Im Sinne der Erfindung ist insbesondere vorgesehen, dass sämtliche derartigen Ausnehmungsenden zwischen Leiterstücken, die beidseitig mit anderen Leiterstücken zu verbinden sind, weiter entfernt von den freien Enden der Leiterstücke angeordnet sind als die Ausnehmungsenden zwischen Leiterstücken von denen eines nur einseitig zu verbinden ist.

In einer weiteren möglichen Verfahrensvariante erstreckt sich eine Ausnehmung zwischen Leiterstücken, die beidseitig mit benachbarten Leiterstücken zu verbinden sind, von den freien Enden dieser Leiterstücke weiter entlang der Längserstreckung dieser Leiterstücke als eine sich aufweitende Ausnehmung zwischen Leiterstücken von denen eines nur einseitig mit einem benachbarten Leiterstück zu verbinden ist. Die Bedingungen dieser beiden Verfahrensvarianten können im Sinne dieser Erfindung selbstverständlich auch gemeinsam vorliegen. Eine erste Ausnehmung in einer Reihenanordnung zwischen einem inneren Leiterstück und einem äußeren Leiterstück kann also quasi eine Tiefe aufweisen, die geringer ist als eine Tiefe einer Ausnehmung in einer Reihenanordnung zwischen zwei inneren Leiterstücken.

Entsprechend ist bei den bereits verschweißten Leiterstücken (bzw. bei der Wicklungen aufweisenden Komponente) vorgesehen, dass die Schweißverbindungen zwischen Leiterstücken, die beidseitig mit benachbarten Leiterstücken verbunden sind, sich entlang der Längserstreckung der Leiterstücke weiter erstreckt als Schweißverbindungen zwischen Leiterstücken von denen eines nur einseitig mit einem benachbarten Leiterstück verbunden ist.

Bei den bereits verschweißten Leiterstücken (bzw. bei der Wicklungen aufweisenden Komponente) ist ggf. auch vorgesehen, dass die Schweißverbindungen zwischen Leiterstücken, die beidseitig mit benachbarten Leiterstücken verbunden sind, einen größeren Querschnitt aufweist als eine Schweißverbindung zwischen Leiterstücken von denen eines nur einseitig mit einem benachbarten Leiterstück verbunden ist.

Das Verfahren umfasst weiter das Verschweißen der zu verbindenden Leiterstücke mittels eines Strahlschweißverfahrens. Der Strahl wird dabei in die sich aufweitenden Ausnehmungen eingebracht, so dass eine leitfähige Schweißverbindung entsteht, die die miteinander zu verbindenden Leiterstücke verbindet.

Dadurch, dass quasi innenliegende Ausnehmungen (also Ausnehmungen zwischen Leiterstücken, die beidseitig zu verbinden sind) in Richtung der Längserstreckung der Leiterstücken tiefer gehen, als die Ausnehmungen im äußeren Bereich, wird die Bildung einer Schweißnaht gefördert, die im zentralen Bereich der Anordnung der Leiterstücken tiefer erstreckt ausgebildet sein kann als im äußeren Bereich.

Es kann erfindungsgemäß vorgesehen sein, dass die Reihenanordnung der Leiterstücke (bei der Wicklungen aufweisenden Komponente oder bei Durchführung des Verfahrens) ein erstes Leiterstückpaar aus zwei miteinander über eine erste Schweißverbindung verbundenen benachbarten Leiterstücken umfasst, wobei das Leiterstückpaar im verbundenen Zustand einen ersten effektiven Leitungsquerschnitt aufweist. Das erste Leiterstückpaar ist mit einem weiteren Leiterstück oder einem zweiten Leiterstückpaar über eine zweite Schweißverbindung verbunden. Diese zweite Schweißverbindung weist einen Leitungsquerschnitt auf, der zwischen 80% und 140% des effektiven Leitungsquerschnitts des ersten Leiterstückpaars beträgt. Eine derartige Ausbildung der Schweißverbindungen trägt dem Umstand Rechnung, dass äußere Leiterstückpaare schaltungstechnisch als quasi ein Leiter genutzt werden können und mit einem weiteren Leiterstückpaar oder einem Leiterstück verbunden werden können, sodass quasi von dem ersten Leiterstückpaar eine entsprechende Verbindung zum zweiten Leiterstückpaar zu bilden ist.

Die einzelnen Leiterstücke können jeweils gleiche Leitungsquerschnitte aufweisen.

Beim Verschweißen kann vorgesehen sein, dass zunächst die Leiterstücke, die beidseitig mit benachbarten Leiterstücken zu verbinden sind, verschweißt werden und anschließend Leiterstücke die nur einseitig mit bereits miteinander verbundenen Leiterstücken verbunden werden, um die Gesamtverbindung zu schaffen. Kann also vorgesehen sein, dass zunächst die Verbindungen geschaffen werden, die das meiste Material benötigen bzw. größten Querschnitte aufweisen und dann die Verbindungen zwischen den Leiterstücken geschaffen werden, die geringere Materialmengen bzw. geringere Leitungsquerschnitte benötigen.

In einer Reihenanordnung können das Anformen und das Anordnen und Fixieren derart durchgeführt werden, dass die Tiefe der Ausnehmungen zwischen Leiterstücken von außen nach innen zunimmt. Entsprechend kann vorgesehen sein, dass beim Verschweißen einer Reihenanordnung das Verschweißen der Leiterstücke von innen nach außen erfolgt. Die beim Verschweißen erzeugten Schweißnähte einer Reihenanordnung können entsprechend von außen nach innen in ihrer Tiefe zunehmen.

Es kann vorgesehen sein, dass die Schweißnaht einer Reihenanordnung von außen nach innen in ihrer Tiefe zunimmt und auf Seiten der vormals freien Enden ein im Wesentlichen gerades Ende bildet. Dies kann bei den Verfahren als auch bei der die Wicklungen aufweisenden Komponente der Fall sein.

Die Schweißnaht kann einen im Wesentlichen dreieckigen Querschnitt aufweisen. Dies kann bei den Verfahren als auch bei der die Wicklungen aufweisenden Komponente der Fall sein.

Direkt vor dem Verschweißen kann vorgesehen sein, dass die freien Enden der zu verbindenden Leiterstücke auf gleicher Höhe enden.

Die Ausnehmung zwischen zwei benachbarten Leiterstücken kann einen dreiecksförmigen Querschnitt aufweisen. Im Sinne der Erfindung sind auch weitere Ausnehmungsformen wie beispielsweise konvexe Formen der Leiterstückenden oder auch Formen mit mehreren ebenen Flächen, die in verschiedenen Winkeln zueinander stehen und die sich zu den freien Enden hin erweiternde Ausnehmung bilden. Auch muldenartige Ausnehmungen, mit einer konkaven Form der freien Enden der Leiterstücke auf der jeweiligen der Ausnehmung zugewandten Seite ist denkbar.

Im Sinne der Erfindung ist auch, wenn die Ausnehmung zwischen zwei Leiterstücken an Ihrem oberen, offenen Ende (quasi an der weitesten Stelle) eine Fläche aufweist, die wenigstens 80%, insbesondere 90%, insbesondere 100%, insbesondere 110%, insbesondere 120%, der Fläche eines der Leiterstücke im unangeformten Zustand entspricht.

Bei Verbindung von zwei Leiterstücken wird am freien Ende beider Leiterstücke typischerweise bis beim Blick auf das freie Ende zur Mitte der Leiterstücke hin die Ausnehmung gebildet, also Material entfernt oder umgeformt.

Das Anformen kann gemeinsam mit einem Ablängen der Leiterstücke erfolgen.

Eine Erfindung ist auch eine Wicklungen aufweisende Komponente eines elektromechanischen Wandlers an sich, die wenigstens zwei miteinander verbundene wicklungsbildende Leiterstücke umfasst, wobei die Leiterstücke über eine Schweißverbindung stoffschlüßig verbunden sind. Die leitfähige Schweißverbindung wiederum weist einen Querschnitt von mindestens 80%, insbesondere 85%, insbesondere 90%, insbesondere 95%, eines Leitungsquerschnitts der Leiterstücke auf. Die Schweißverbindung kann zusätzlich einen Querschnitt von höchstens 140%, insbesondere 130%, insbesondere 120%, insbesondere 110%, des Leitungsquerschnitts der Leiterstücke aufweisen.

Eine Erfindung ist eine Wicklungen aufweisende Komponente eines elektromechanischen Wandlers, die wenigstens zwei miteinander über eine Schweißverbindung stoffschlüssig verbundene wicklungsbildende Leiterstücke umfasst, wobei die Schweißverbindung im Wesentlichen zwischen den Leiterstücken ausgebildet ist. Damit ist gemeint, dass die Schweißverbindung nicht durch eine aufgeschmolzene Materialbrücke auf den vormals freien Enden der Leiterstücke ausgebildet ist, sondern sich entlang der Längserstreckung der Leiterstücke jeweils seitlich der Schweißverbindung Material der Leiterstücke erstreckt, welches nicht Teil der Schweißverbindung ist, sondern beim Schweißvorgang nicht aufgeschmolzen wurde.

Eine Erfindung ist eine Wicklungen aufweisende Komponente eines elektromechanischen Wandlers, die mehrere in einer Reihenanordnung miteinander über eine Schweißverbindung stoffschlüssig verbundene wicklungsbildende Leiterstücke umfasst. Die Reihenanordnung der Leiterstücke umfasst dabei ein erstes Leiterstückpaar aus zwei miteinander über eine erste Schweißverbindung verbundenen benachbarten Leiterstücken. Das Leiterstückpaar weist einen ersten effektiven Leitungsquerschnitt, der der Summe der Leitungsquerschnitte der Leiterstücke des Leiterstückpaars entspricht, auf, und ist mit einem weiteren Leiterstück oder einem zweiten Leiterstückpaar über eine zweite Schweißverbindung verbunden. Die zweite Schweißverbindung weist einen Leitungsquerschnitt auf, der zwischen mindestens 80%, insbesondere 85%, insbesondere 90%, insbesondere 95%, und höchstens 140%, insbesondere 130%, insbesondere 120%, insbesondere 110%, des effektiven Leitungsquerschnitts des ersten Leiterstückpaars beträgt. Die einzelnen Leiterstücke können dabei insbesondere jeweils gleiche Leitungsquerschnitte aufweisen.

Eine Erfindung ist eine Wicklungen aufweisende Komponente eines elektromechanischen Wandlers, die mehrere in einer Reihenanordnung miteinander über eine Schweißverbindung stoffschlüssig verbundene wicklungsbildende Leiterstücke umfasst, wobei dass die Schweißverbindungen der Reihenanordnung von außen nach innen in ihrer Tiefe entlang der Längserstreckung der Leiterstücke zunehmen.

Bei den Wicklungen aufweisenden Komponenten können die Schweißverbindungen einen im Wesentlichen dreieckigen Querschnitt aufweist. Die einzelnen dreieckigen Querschnitte der Schweißverbindungen können sich dabei auch in Grenzbereichen überlappen.

Weitere Merkmale, Anwendungsmöglichkeiten und Vorteile der Erfindung ergeben sich aus der nachfolgenden Beschreibung von Ausführungsbeispielen der Erfindung, die anhand der Zeichnung erläutert werden.

Es zeigen:
- Figur 1: zwei Leiterstücke;
- Figur 2: weitere Details der Leiterstücke aus Figur 1;
- Figur 3: weitere Details der Leiterstücke aus Figur 1;
- Figur 4: zwei Leiterstücke, die über eine Schweißnaht verbunden sind;
- Figur 5: Eine Reihenanordnung von Leiterstücken;
- Figur 6: Eine weitere Reihenanordnung von Leiterstücken;
- Figur 7: Eine weitere Reihenanordnung von Leiterstücken;
- Figur 8: zwei Leiterstücke, zwischen denen eine Ausnehmung angeordnet ist;
- Figur 9: zwei Leiterstücke, zwischen denen eine Ausnehmung angeordnet ist;
- Figur 10: zwei Leiterstücke, zwischen denen eine Ausnehmung angeordnet ist;
- Figur 11: Eine Reihenanordnung von Leiterstücken, die miteinander verschweißt sind;
- Figur 12: Eine weitere Reihenanordnung von Leiterstücken vor und nach dem Verschweißen;
- Figur 13: Eine Reihenanordnung von Leiterstücken in verschiedenen Prozessschritten;
- Figur 14: Eine weitere Reihenanordnung von Leiterstücken;

In den folgenden Figuren tragen sich entsprechende Bauteile und Elemente gleiche Bezugszeichen. Der besseren Übersichtlichkeit wegen sind nicht in allen Figuren sämtliche Bezugszeichen wiedergegeben.

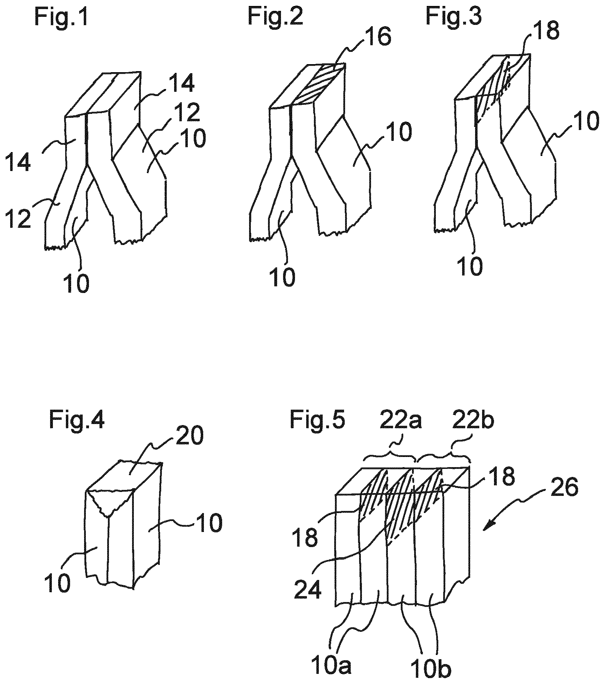

Figur 1 zeigt zwei Leiterstücke 10, die in einer nicht weiter dargestellten Komponente eines elektromechanischen Wandlers angeordnet und fixiert sind. Die beiden Leiterstücke 10 weisen jeweils einen abgewinkelten Abschnitt 12 auf, der in einem Bereich 14 den endet, indem die Leiterstücke 10 aneinander anliegen.

Die Querschnittsfläche der Leiterstücke 10 entlang ihrer Längserstreckung bildet einen effektiven Leitungsquerschnitt 16 eines jeweiligen Leiterstücke 10.

Für das rechts gezeigte Leiterstücke 10 ist dies in Figur 2 durch eine Schattierung hervorgehoben.

In Figur 3 ist entsprechend ein gewünschter Querschnitt 18 einer zwischen den Leiterstücken zu bildenden Schweißnaht ebenfalls schraffiert dargestellt. Um einen möglichst einheitlichen Widerstand zu erzielen ist es sinnvoll, wenn der Querschnitt 18 der die Leiterstücke verbindenden Schweißnaht im Wesentlichen dem Leitungsquerschnitt 16 der jeweils zu verbindenden Leiterstücke 10 entspricht. Dabei beispielsweise vorgesehen sein, dass der Querschnitt 18 der Schweißnaht wenigstens 80 % höchstens 140 % des Leitungsquerschnitts 16 der jeweiligen Leiterstücke aufweist.

Figur 4 illustriert 2 mittels einer Schweißnaht 20 verbundene Leiterstücke 10 der Querschnitt 18 der Schweißnaht 20 entspricht dabei dem in Figur 3 als wünschenswert identifizierten Querschnitt 18.

Figur 5 illustriert eine Konfiguration in der zwei erste Leiterstücke 10a zu einem gemeinsamen ersten Leiterstückpaar 22a verbunden werden und in einer Komponente (bspw. einem Stator) eines elektromechanischen Wandlers entsprechend schaltungstechnisch verbunden sind. Die Leiterstücke 10b hingegen werden zu einem gemeinsamen zweiten Leiterstückpaar 22b verbunden und in der Komponente des elektromechanischen Wandlers entsprechend schaltungstechnisch verbunden. Die Verbindung zwischen den jeweils ersten und zweiten Leiterstücken 10a und 10b zur Bildung der einzelnen Leiterstückpaare 22a und 22b erfolgt entsprechend der Schweißnahtbildung wie in Figur 4 dargestellt mit dem Querschnitt 18. Die Verbindung der Leiterstückpaare 22a und 22b hingegen erfolgt derart, dass die Summe der einzelnen Leitungsquerschnitte 16 der Leiterstückpaare 22a, 22b aufaddiert wird und die Leiterstückpaare 22a, 22b dann wie ein einzelnes Leiterstück behandelt werden, wobei der Querschnitt der Summe der einzelnen Leiterstückequerschnitte 16 entspricht. Da im vorliegenden Beispiel alle Leiterstücke 10 den gleichen Querschnitt 16 aufweisen ist es wünschenswert, wenn die Querschnitte 18 der Schweißverbindung zwischen den einzelnen Leiterstücken 10 dem Leiterquerschnitt 16 der einzelnen Leiterstücke 10 entspricht und der Querschnitt 24 zwischen den Leiterstückpaaren 22 entsprechend doppelt so groß ist.

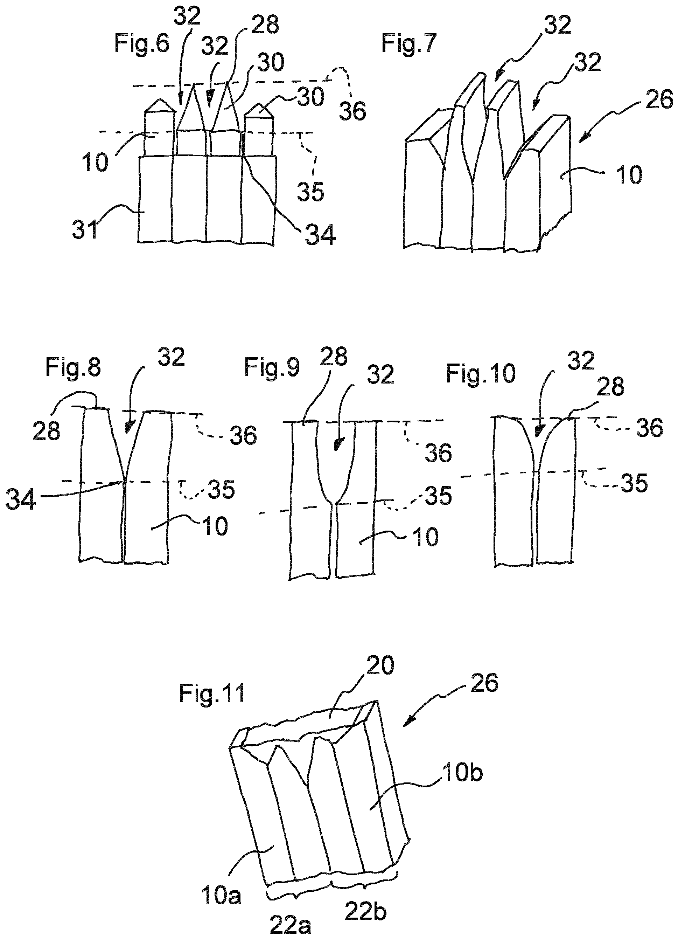

In Figur 6 ist eine Reihenanordnung 26 aus vier Leiterstücken 10 gezeigt, wobei die Leiterstücke 10 jeweils einen runden Querschnitt aufweisen und an ihren freien Enden 28 jeweils angeformt sind. Die Anformung ist dabei derart durchgeführt worden, dass jedes Leiterstücke 10 eine Spitze 30 aufweist. Zwar sind die Leiterstücke 10 durch eine im unteren Bereich vorhandene Isolierung 31 leicht zueinander beabstandeten hierunter ist jedoch im Sinne der vorliegenden Erfindung ein Anliegen zu verstehen, da die Leiterstücke ausreichend nah zur Bildung einer Schweißnaht aneinander angeordnet sind. Zwischen den jeweiligen Spitzen 30 ergeben sich Ausnehmungen 32.

Die Ausnehmungen 32 sind derart ausgebildet, dass sie sich jeweils zu den freien Enden 28 hin aufweiten. Auf der den freien Enden 28 abgewandten Seite der Ausnehmungen 32 weisen die Ausnehmungen 32 jeweils ein Ausnehmungsende 34 auf. Die Position der Ausnehmungsenden 34 ist durch die Linie 35 illustriert. Im vorliegenden Fall haben alle Ausnehmungsenden 34 den gleichen Abstand zu den freien Enden 28 bzw. zu einer Oberkante 36 der freien Enden 28.

In Figur 7 ist eine weitere mögliche Reihenanordnung 26 aus vier Leiterstücken 10 illustriert. Die in diesem Beispiel verwenden Leiterstücke 10 weisen einen rechteckigen Querschnitt auf.

Die Figuren 8-10 illustriert Beispiele für mögliche Formen von Ausnehmungen 32. In Figur 8 ist eine Ausnehmung mit dreiecksförmigem Querschnitt gezeigt. In Figur 9 ist eine Ausnehmung gezeigt, die durch eine Anformung der Leiterstücke mit einer konkaven Formgebung der Leiterstückenden realisiert ist. In Figur 10 ist eine Ausnehmung gezeigt, die durch eine Anformung der Leiterstücke mit einer konvexen Formgebung der Leiterstückenden realisiert ist.

Figur 11 illustriert eine Schweißnaht, wie sie beispielsweise durch Verschweißen der Reihenanordnung 26 von Figur 7 realisiert werden kann. Die einzelnen Schweißverbindungen 20 weisen jeweils dreieckige Querschnitte auf. Die Querschnitte der Schweißverbindungen 20 nehmen jeweils von außen nach innen zu.

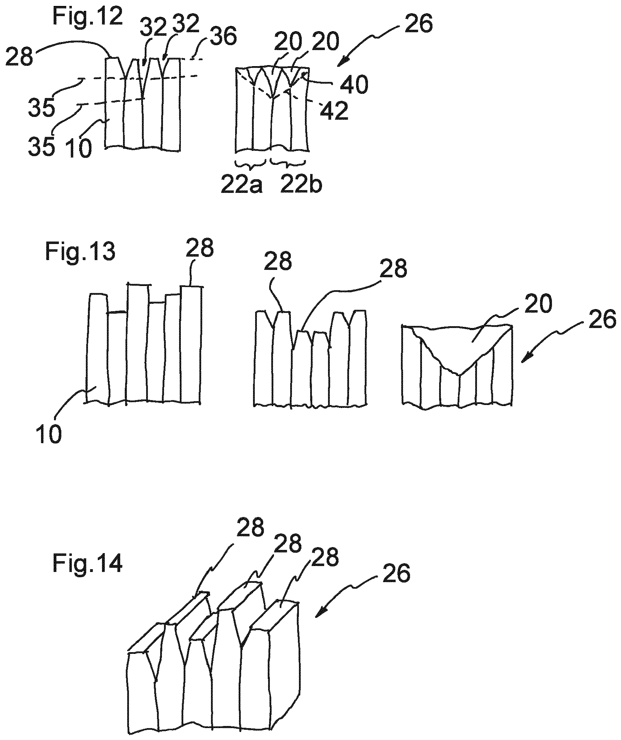

Figur 12 illustriert ähnlich zu Figur 5 bzw. Figuren 6, 7 und 11 die Verbindung von 4 Leiterstücken, von den jeweils 2 ein Leiterstückpaar 22 bilden. Die Schweißnähte 20 zwischen den einzelnen Leiterstücken 10 sind dabei jeweils dreiecksförmig (rechte Darstellung). Insgesamt ergibt sich auch eine dreiecksförmige Schweißzone 40. Die Schweißzone 40 wird quasi durch das die Schweißnähte einhüllende Dreieck 42 beschrieben. In Figur 12 links sind die einzelnen Leiterstücke 10 im angeordneten und fixierten Zustand gezeigt, direkt vor dem Verschweißen. Die Position (gekennzeichnet durch Linien 35) der Ausnehmungsenden 34 ist dabei derart, dass die äußeren Ausnehmungsenden 34 näher an den freien Enden 28 (diese liegen vorliegend auf gleicher Höhe und ihre Position ist durch die Linie 36 gekennzeichnet) der Leiterstücke 10 liegen. Die äußeren Leiterstücke 10 sind auch nur einseitig angeformt und zwar auf ihrer der jeweiligen Ausnehmung 32 zugewandten Seite.

In Figur 13 ist die Verbindung von sechs Leiterstücken 10 miteinander illustriert. Die Schmelzzone bzw. Schweißzone 40 ist in diesem Beispiel ebenfalls dreieckförmig. Vorliegend ist das Material derart aufgeschmolzen worden, dass keine einzelnen Schweißnähte zwischen den einzelnen Leiterstücken mehr erkennbar sind, sondern die gesamte Schweißzone 40 einheitlich dreiecksförmig ausgebildet ist.

Zur Bildung der Verschweißung in Figur 13 wurde dabei wie folgt verfahren, die einzelnen Leiterstücke wurden zunächst in der für die Verschweißung vorgesehenen Anordnung angeordnet und fixiert (linke Darstellung) anschließend angeformt, wobei dieses Anformen auch ein Ablängen der Leiterstücke beinhaltet hat (mittlere Darstellung). Anschließend wurde mittels eines Strahlschweißverfahrens die Verschweißung der einzelnen Leiterstücke vorgenommen (rechte Darstellung).

In Figur 14 ist eine weitere Reihenanordnung 26 direkt vor dem Verschweißen illustriert. Die einzelnen Leiterstücke 10 sind dabei derart angeordnet und fixiert, dass ihre freien Enden 28 auf unterschiedlichen Höhen enden.

Die in den Figuren gezeigten Konfigurationen können mittels der Erfindungsgemäßen Verfahren erzeugt werden und können auch Teil der erfindungsgemäßen Wicklungen aufweisenden Komponenten eines elektromechanischen Wandlers sein.

## Patentansprüche

1. Verfahren zur Herstellung einer Wicklungen aufweisenden Komponente eines elektromechanischen Wandlers, wobei das Verfahren die Schritte umfasst:
Anformen eines der freien Enden (28) zweier wicklungsbildender Leiterstücke (10), die leitend miteinander zu verbinden sind;
Anordnen und Fixieren der miteinander zu verbindenden Leiterstücke (10) in der Komponente des elektromechanischen Wandlers in einer für einen Verschweißungsvorgang vorgesehenen Konfiguration;
wobei das Anformen und das Anordnen und Fixieren derart durchgeführt wird, dass die beiden Leiterstücke (10) in der vorgesehenen Konfiguration aneinander anliegen und zwischen den beiden Leiterstücken (10) eine sich zu den freien Enden hin aufweitende Ausnehmung (32) gegeben ist;
Verschweißen der beiden zu verbindenden Leiterstücke (10) mittels eines Strahlschweißverfahrens, wobei der Strahl in die sich aufweitende Ausnehmung (32) eingebracht wird, so dass eine leitfähige Schweißverbindung (20) entsteht, die die beiden miteinander zu verbindenden Leiterstücke (10) verbindet;
**dadurch gekennzeichnet, dass** die beiden miteinander zu verbindenden Leiterstücke (10) den gleichen Leitungsquerschnitt (16) aufweisen und die leitfähige Schweißverbindung einen Querschnitt (18) von mindestens 80% und höchstens 140% des Leitungsquerschnitts (16) der Leiterstücke (10) aufweist.

2. Verfahren zur Herstellung einer Wicklungen aufweisenden Komponente eines elektromechanischen Wandlers, wobei das Verfahren die Schritte umfasst:
Anformen freier Enden (28) wicklungsbildender Leiterstücke (10), die leitend miteinander zu verbinden sind;
Anordnen und Fixieren der miteinander zu verbindenden Leiterstücke (10) in der Komponente des elektromechanischen Wandlers in einer für einen Verschweißungsvorgang vorgesehenen Konfiguration;
**dadurch gekennzeichnet, dass**
das Anformen und das Anordnen und Fixieren derart durchgeführt wird, dass die Leiterstücke (10) in einer vorgesehenen Reihenanordnung (26) aneinander anliegen und zwischen benachbarten Leiterstücken (10) eine sich zu den freien Enden (28) hin aufweitende Ausnehmung (32) mit einem den freien Enden (28) abgewandten Ausnehmungsende (34) gegeben ist, wobei entweder
ein Ausnehmungsende (34) einer sich aufweitenden Ausnehmung (32) zwischen Leiterstücken (10), die beidseitig mit benachbarten Leiterstücken (10) zu verbinden sind, weiter von den freien Enden (28) der Leiterstücke (10) entfernt angeordnet ist als das Ausnehmungsende (34) einer sich aufweitenden Ausnehmung (32) zwischen Leiterstücken (10) von denen eines nur einseitig mit einem benachbarten Leiterstück (10) zu verbinden ist,
oder wobei
eine Ausnehmung (32) zwischen Leiterstücken (10), die beidseitig mit benachbarten Leiterstücken (10) zu verbinden sind, sich von den freien Enden (28) dieser Leiterstücke (10) weiter entlang der Längserstreckung dieser Leiterstücke (10) erstreckt als eine sich aufweitende Ausnehmung (32) zwischen Leiterstücken (10) von denen eines nur einseitig mit einem benachbarten Leiterstück (10) zu verbinden ist;
Verschweißen der zu verbindenden Leiterstücke (10) mittels eines Strahlschweißverfahrens, wobei der Strahl in die sich aufweitenden Ausnehmungen (32) eingebracht wird, so dass eine leitfähige Schweißverbindung (20) entsteht, die die miteinander zu verbindenden Leiterstücke verbindet.

3. Verfahren nach dem vorangehenden Anspruch, **dadurch gekennzeichnet, dass** die Reihenanordnung (26) der Leiterstücke (10) ein erstes Leiterstückpaar (22a) aus zwei miteinander über eine erste Schweißverbindung (20) verbundenen benachbarten Leiterstücken (10a) umfasst, das im verbundenen Zustand einen ersten effektiven Leitungsquerschnitt, der der Summe der Leitungsquerschnitte (16) der Leiterstücke (10a) des Leiterstückpaars (22a) entspricht, aufweist, und mit einem weiteren Leiterstück (10) oder einem zweiten Leiterstückpaar (22b) über eine zweite Schweißverbindung (20) verbunden ist, wobei die zweite Schweißverbindung (20) einen Leitungsquerschnitt (24) aufweist, der zwischen 80% und 140% des effektiven Leitungsquerschnitts des ersten Leiterstückpaars (22a) beträgt.

4. Verfahren nach einem der vorangehenden Ansprüche, **dadurch gekennzeichnet, dass** die einzelnen Leiterstücke (10) jeweils gleiche Leitungsquerschnitte (16) aufweisen.

5. Verfahren nach einem der vorangehenden Ansprüche 2 bis 4, **dadurch gekennzeichnet, dass** beim Verschweißen zunächst die Leiterstücke (10), die beidseitig mit benachbarten Leiterstücken (10) zu verbinden sind, verschweißt werden und anschließend Leiterstücke (10), die nur einseitig mit bereits miteinander verbundenen Leiterstücken (10) verbunden werden, um die Gesamtverbindung zu schaffen.

6. Verfahren nach einem der vorangehenden Ansprüche 2 bis 5, **dadurch gekennzeichnet, dass** in einer Reihenanordnung (26) das Anformen und das Anordnen und Fixieren derart durchgeführt wird, dass die Tiefe der Ausnehmungen (32) zwischen Leiterstücken (10) von außen nach innen zunimmt.

7. Verfahren nach einem der vorangehenden Ansprüche 2 bis 6, **dadurch gekennzeichnet, dass** beim Verschweißen einer Reihenanordnung (26) das Verschweißen der Leiterstücke (10) von innen nach außen erfolgt.

8. Verfahren nach einem der vorangehenden Ansprüche 2 bis 7, **dadurch gekennzeichnet, dass** die beim Verschweißen erzeugten Schweißnähte (20) einer Reihenanordnung (26) von außen nach innen in ihrer Tiefe entlang der Längserstreckung der Leiterstücke (10) zunehmen.

9. Verfahren nach einem der vorangehenden Ansprüche 2 bis 8, **dadurch gekennzeichnet, dass** die beim Verschweißen erzeugten Schweißnähte (20) einer Reihenanordnung (26) von außen nach innen in ihrer Tiefe entlang der Längserstreckung der Leiterstücke (10) zunehmen und auf Seiten der vormals freien Enden (28) ein im Wesentlichen gerades Ende bildet.

10. Verfahren nach einem der vorangehenden Ansprüche, **dadurch gekennzeichnet, dass** direkt vor dem Verschweißen die freien Enden (28) der zu verbindenden Leiterstücke (10) auf gleicher Höhe enden.

11. Verfahren nach einem der vorangehenden Ansprüche, **dadurch gekennzeichnet, dass** die gebildete Schweißnaht (20) einen im Wesentlichen dreieckigen Querschnitt aufweist.

12. Verfahren nach einem der vorangehenden Ansprüche, **dadurch gekennzeichnet, dass** die Ausnehmung zwischen 2 benachbarten Leiterstücken (10) einen dreiecksförmigen Querschnitt aufweist.

13. Wicklungen aufweisende Komponente eines elektromechanischen Wandlers, die wenigstens zwei miteinander verbundene wicklungsbildende Leiterstücke (10) umfasst, wobei die Leiterstücke (10) über eine Schweißverbindung (20) stoffschlüssig verbunden sind, **dadurch gekennzeichnet, dass** die leitfähige Schweißverbindung einen Querschnitt (18) von mindestens 80% eines Leitungsquerschnitts (16) der Leiterstücke (10) aufweist und wobei die Schweißverbindung (20) zusätzlich einen Querschnitt (18) von höchstens 140% des Leitungsquerschnitts (16) der Leiterstücke (10) aufweist.

14. Wicklungen aufweisende Komponente eines elektromechanischen Wandlers, die mehrere in einer Reihenanordnung (26) miteinander über eine Schweißverbindung (20) stoffschlüssig verbundene wicklungsbildende Leiterstücke (10) umfasst, **dadurch gekennzeichnet, dass** die Reihenanordnung (26) der Leiterstücke (10) ein erstes Leiterstückpaar (22a) aus zwei miteinander über eine erste Schweißverbindung (20) verbundenen benachbarten Leiterstücken (10a) umfasst, wobei das Leiterstückpaar (22a) einen ersten effektiven Leitungsquerschnitt, der der Summe der Leitungsquerschnitte (16) der Leiterstücke (10a) des Leiterstückpaars (22a) entspricht, aufweist, und mit einem weiteren Leiterstück (10) oder einem zweiten Leiterstückpaar (22b) über eine zweite Schweißverbindung (20) verbunden ist, wobei die zweite Schweißverbindung (20) einen Leitungsquerschnitt (24) aufweist, der zwischen 80% und 140% des effektiven Leitungsquerschnitts des ersten Leiterstückpaars (22a) beträgt.

15. Wicklungen aufweisende Komponente eines elektromechanischen Wandlers, die mehrere in einer Reihenanordnung (26) miteinander über eine Schweißverbindung (20) stoffschlüssig verbundene wicklungsbildende Leiterstücke (10) umfasst, **dadurch gekennzeichnet, dass** die Schweißverbindungen (20) der Reihenanordnung (26) von außen nach innen in ihrer Tiefe entlang der Längserstreckung der Leiterstücke (10) zunehmen.

## Claims

1. Method for producing a component of an electromechanical transducer that has windings, wherein the method comprises the steps of:
molding one of the free ends (28) of two winding-forming conductor pieces (10) which are to be conductively interconnected;
arranging and fixing the conductor pieces (10) to be interconnected in the component of the electromechanical transducer in a configuration intended for a welding process;
wherein the molding, arranging and fixing is carried out in such a way that the two conductor pieces (10) abut one another in the intended configuration and a recess (32) which widens toward the free ends is provided between the two conductor pieces (10);
welding the two conductor pieces (10) to be connected by means of a beam welding process, wherein the beam is introduced into the widening recess (32) so that a conductive weld connection (20) is established which connects the two conductor pieces (10) to be interconnected;
**characterized in that** the two conductor pieces (10) to be interconnected have the same conductor cross section (16) and **in that** the conductive weld connection has a cross section (18) of at least 80% and at most 140% of the conductor cross section (16) of the conductor pieces (10) .

2. Method for producing a component of an electromechanical transducer that has windings, wherein the method comprises the steps of:
molding free ends (28) of winding-forming conductor pieces (10) which are to be conductively interconnected;
arranging and fixing the conductor pieces (10) to be interconnected in the component of the electromechanical transducer in a configuration intended for a welding process;
**characterized in that** the molding, arranging and fixing is carried out in such a way that the conductor pieces (10) abut one another in an intended series arrangement (26) and a recess (32) which widens toward the free ends (28) with a recess end (34) facing away from the free ends (28) is provided between adjacent conductor pieces (10),
wherein either
one recess end (34) of a widening recess (32) between conductor pieces (10) which are to be connected on both sides to adjacent conductor pieces (10) is arranged further away from the free ends (28) of the conductor pieces (10) than the recess end (34) of a widening recess (32) between conductor pieces (10) of which one is to be connected on one side only to an adjacent conductor piece (10),
or wherein
one recess (32) between conductor pieces (10) which are to be connected on both sides to adjacent conductor pieces (10) extends from the free ends (28) of these conductor pieces (10) further along the longitudinal extension of these conductor pieces (10) than a widening recess (32) between conductor pieces (10) of which one is to be connected on one side only to an adjacent conductor piece (10);
welding the conductor pieces (10) to be connected by means of a beam welding process, wherein the beam is introduced into the widening recess (32) so that a conductive weld connection (20) is established which connects the two conductor pieces to be interconnected.

3. Method according to the preceding claim, **characterized in that** the series arrangement (26) of the conductor pieces (10) comprises a first conductor piece pair (22a) made up of two adjacent conductor pieces (10a) interconnected via a first weld connection (20), which conductor piece pair has, in the connected state, a first effective conductor cross section which corresponds to the sum of the conductor cross sections (16) of the conductor pieces (10a) of the conductor piece pair (22a), and is connected to a further conductor piece (10) or a second conductor piece pair (22b) via a second weld connection (20), wherein the second weld connection (20) has a conductor cross section (24) which is between 80% and 140% of the effective conductor cross section of the first conductor piece pair (22a).

4. Method according to any of the preceding claims, **characterized in that** the individual conductor pieces (10) each have the same conductor cross sections (16).

5. Method according to any of the preceding claims 2 to 4, **characterized in that**, during welding, first the conductor pieces (10) that are to be connected on both sides to adjacent conductor pieces (10) are welded and subsequently conductor pieces (10) are welded that are connected on only one side to conductor pieces (10) that are already interconnected, in order to provide the overall connection.

6. Method according to any of the preceding claims 2 to 5, **characterized in that**, in a series arrangement (26), the molding, arranging and fixing is carried out in such a way that the depth of the recesses (32) between conductor pieces (10) increases from the outside of the series arrangement (26) to the inside.

7. Method according to any of the preceding claims 2 to 6, **characterized in that**, during welding of a series arrangement (26) the welding of the conductor pieces (10) is performed from the inside of the series arrangement (26) to the outside.

8. Method according to any of the preceding claims 2 to 7, **characterized in that** the weld seams (20) of a series arrangement (26) produced during welding increase in depth from the outside of the series arrangement (26) to the inside along the longitudinal extension of the conductor pieces (10).

9. Method according to any of the preceding claims 2 to 8, **characterized in that** the weld seams (20) of a series arrangement (26) produced during welding increase in depth from the outside of the series arrangement (26) to the inside along the longitudinal extension of the conductor pieces (10) and a substantially straight end is formed on the side of the previously free ends (28).

10. Method according to any of the preceding claims, **characterized in that**, directly before welding, the free ends (28) of the conductor pieces (10) to be connected end at the same height.

11. Method according to any of the preceding claims, **characterized in that** the weld seam (20) formed has a substantially triangular cross section.

12. Method according to any of the preceding claims, **characterized in that** the recess between two adjacent conductor pieces (10) has a triangular cross section.

13. Component of an electromechanical transducer that has windings and comprises at least two interconnected winding-forming conductor pieces (10), wherein the conductor pieces (10) are integrally bonded via a weld connection (20), **characterized in that** the conductive weld connection has a cross section (18) of at least 80% of a conductor cross section (16) of the conductor pieces (10) and wherein, in addition, the weld connection (20) has a cross section (18) of at most 140% of the conductor cross section (16) of the conductor pieces (10).

14. Component of an electromechanical transducer that has windings and comprises multiple winding-forming conductor pieces (10) which are integrally bonded to one another in a series arrangement (26) via a weld connection (20), **characterized in that** the series arrangement (26) of the conductor pieces (10) comprises a first conductor piece pair (22a) made up of two adjacent conductor pieces (10a) interconnected via a first weld connection (20), wherein the conductor piece pair (22a) has a first effective conductor cross section which corresponds to the sum of the conductor cross sections (16) of the conductor pieces (10a) of the conductor piece pair (22a), and is connected to a further conductor piece (10) or a second conductor piece pair (22b) via a second weld connection (20), wherein the second weld connection (20) has a conductor cross section (24) which is between 80% and 140% of the effective conductor cross section of the first conductor piece pair (22a).

15. Component of an electromechanical transducer that has windings and comprises multiple winding-forming conductor pieces (10) which are integrally bonded to one another in a series arrangement (26) via a weld connection (20), **characterized in that** the weld connections (20) of the series arrangement (26) increase in depth from the outside of the series arrangement (26) to the inside along the longitudinal extension of the conductor pieces (10).

## Revendications

1. Procédé pour la fabrication d'un composant présentant des enroulements d'un convertisseur électromécanique, dans lequel le procédé comprend les étapes:
de formation d'une des extrémités libres (28) de deux pièces conductrices (10) formant un enroulement, qui sont à relier l'une à l'autre de manière conductrice;
de disposition et de fixation des pièces conductrices (10) à relier les unes aux autres dans le composant du convertisseur électromécanique dans une configuration prévue pour un processus de soudage;
dans lequel la formation et la disposition et la fixation sont réalisées de telle sorte que les deux pièces conductrices (10) s'appliquent l'une sur l'autre dans la configuration prévue et qu'un évidement (32) s'élargissant en direction des extrémités libres est présent entre les deux pièces conductrices (10);
de soudage des deux pièces conductrices (10) à relier au moyen d'un procédé de soudage par faisceau, dans lequel le faisceau est introduit dans l'évidement (32) s'élargissant, de sorte qu'une liaison soudée (20) conductrice est produite, qui relie les deux pièces conductrices (10) à relier l'une à l'autre;
**caractérisé en ce que**
les deux pièces conductrices (10) à relier l'une à l'autre présentent la même section transversale conductrice (16) et la liaison soudée conductrice présente une section transversale (18) d'au moins 80 % et d'au plus 140 % de la section transversale conductrice (16) des pièces conductrices (10).

2. Procédé pour la fabrication d'un composant présentant des enroulements d'un convertisseur électromécanique, dans lequel le procédé comprend les étapes:
de formation d'extrémités libres (28) de pièces conductrices (10) formant un enroulement, qui sont à relier les unes aux autres de manière conductrice;
de disposition et de fixation des pièces conductrices (10) à relier les unes aux autres dans le composant du convertisseur électromécanique dans une configuration prévue pour un processus de soudage;
**caractérisé en ce que**
la formation et la disposition et la fixation sont réalisées de telle sorte que les pièces conductrices (10) s'appliquent l'une sur l'autre dans une disposition en rangée (26) prévue et qu'un évidement (32) s'élargissant en direction des extrémités libres (28) avec une extrémité d'évidement (34) opposée aux extrémités libres (28) est présent entre des pièces conductrices (10) voisines,
dans lequel
soit une extrémité d'évidement (34) d'un évidement (32) s'élargissant entre des pièces conductrices (10), qui sont à relier des deux côtés à des pièces conductrices (10) voisines, est disposée plus à distance des extrémités (28) des pièces conductrices (10) que l'extrémité d'évidement (34) d'un évidement (32) s'élargissant entre des pièces conductrices (10) dont une n'est à relier que d'un côté à une pièce conductrice (10) voisine,
ou dans lequel
un évidement (32) entre des pièces conductrices (10), qui sont à relier des deux côtés à des pièces conductrices (10) voisines, s'étend à partir des extrémités (28) libres de ces pièces conductrices (10) plus loin le long de l'étendue longitudinale de ces pièces conductrices (10) qu'un évidement (32) s'élargissant entre des pièces conductrices (10) dont une n'est à relier que d'un côté à une pièce conductrice (10) voisine;
de soudage des pièces conductrices (10) à relier au moyen d'un procédé de soudage par faisceau, dans lequel le faisceau est introduit dans les évidements (32) s'élargissant, de sorte qu'une liaison soudée (20) conductrice est produite, qui relie les pièces conductrices à relier les unes aux autres.

3. Procédé selon la revendication précédente, **caractérisé en ce que** la disposition en rangée (26) des pièces conductrices (10) comprend une première paire de pièces conductrices (22a) composée de deux pièces conductrices (10a) voisines reliées l'une à l'autre par l'intermédiaire d'une première liaison soudée (20), qui dans l'état relié présente une première section transversale conductrice effective, qui correspond à la somme des sections transversales conductrices (16) des pièces conductrices (10a) de la paire de pièces conductrices (22a), et est reliée à une autre pièce conductrice (10) ou une deuxième paire de pièces conductrices (22b) par l'intermédiaire d'une deuxième liaison soudée (20), dans lequel la deuxième liaison soudée (20) présente une section transversale conductrice (24), qui est comprise entre 80 % et 140 % de la section transversale conductrice effective de la première paire de pièces conductrices (22a).

4. Procédé selon l'une quelconque des revendications précédentes, **caractérisé en ce que** les pièces conductrices (10) individuelles présentent respectivement des sections transversales conductrices (16) identiques.

5. Procédé selon l'une quelconque des revendications précédentes 2 à 4, **caractérisé en ce que** lors du soudage tout d'abord les pièces conductrices (10) qui sont à relier des deux côtés à des pièces conductrices (10) voisines sont soudées et ensuite les pièces conductrices (10) qui ne sont reliées que d'un côté à des pièces conductrices (10) déjà reliées les unes aux autres, afin de produire la liaison globale.

6. Procédé selon l'une quelconque des revendications précédentes 2 à 5, **caractérisé en ce que** dans une disposition en rangée (26) la formation et la disposition et la fixation sont réalisées de telle sorte que la profondeur des évidements (32) entre les pièces conductrices (10) augmente de l'extérieur vers l'intérieur.

7. Procédé selon l'une quelconque des revendications précédentes 2 à 6, **caractérisé en ce que** lors du soudage d'une disposition en rangée (26) le soudage des pièces conductrices (10) s'effectue de l'intérieur vers l'extérieur.

8. Procédé selon l'une quelconque des revendications précédentes 2 à 7, **caractérisé en ce que** les cordons de soudure (20) d'une disposition en rangée (26) produits lors du soudage augmentent dans leur profondeur de l'extérieur vers l'intérieur le long de l'étendue longitudinale des pièces conductrices (10).

9. Procédé selon l'une quelconque des revendications précédentes 2 à 8, **caractérisé en ce que** les cordons de soudure (20) d'une disposition en rangée (26) produits lors du soudage augmentent dans leur profondeur de l'extérieur vers l'intérieur le long de l'étendue longitudinale des pièces conductrices (10) et forme une extrémité sensiblement rectiligne du côté des extrémités (28) précédemment libres.

10. Procédé selon l'une quelconque des revendications précédentes, **caractérisé en ce que** directement avant le soudage les extrémités (28) libres des pièces conductrices (10) à relier terminent à la même hauteur.

11. Procédé selon l'une quelconque des revendications précédentes, **caractérisé en ce que** le cordon de soudure (20) formé présente une section transversale sensiblement triangulaire.

12. Procédé selon l'une quelconque des revendications précédentes, **caractérisé en ce que** l'évidement entre 2 pièces conductrices (10) voisines présente une section transversale triangulaire.

13. Composant présentant des enroulements d'un convertisseur électromécanique, qui comprend au moins deux pièces conductrices (10) formant un enroulement reliées l'une à l'autre, dans lequel les pièces conductrices (10) sont reliées par liaison de matières par l'intermédiaire d'une liaison soudée (20), **caractérisé en ce que** la liaison soudée conductrice présente une section transversale (18) d'au moins 80 % d'une section transversale conductrice (16) des pièces conductrices (10) et dans lequel la liaison soudée (20) présente en plus une section transversale (18) de maximum 140 % de la section transversale conductrice (16) des pièces conductrices (10).

14. Composant présentant des enroulements d'un convertisseur électromécanique, qui présente plusieurs pièces conductrices (10) formant un enroulement reliées les unes aux autres par liaison de matière par l'intermédiaire d'une liaison soudée (20) dans une disposition en rangée (26), **caractérisé en ce que** la disposition en rangée (26) des pièces conductrices (10) comprend une première paire de pièces conductrices (22a) composée de deux pièces conductrices (10a) voisines reliées l'une à l'autre par l'intermédiaire d'une première liaison soudée (20), dans lequel la paire de pièces conductrices (22a) présente une première section transversale conductrice effective, qui correspond à la somme des sections transversales conductrices (16) des pièces conductrices (10a) de la paire de pièces conductrices (22a), et est reliée à une autre pièce conductrice (10) ou une deuxième paire de pièces conductrices (22b) par l'intermédiaire d'une deuxième liaison soudée (20), dans lequel la deuxième liaison soudée (20) présente une section transversale conductrice (24), qui est comprise entre 80 % et 140 % de la section transversale conductrice effective de la première paire de pièces conductrices (22a).

15. Composant présentant des enroulements d'un convertisseur électromécanique, qui comprend plusieurs pièces conductrices (10) formant un enroulement reliées les unes aux autres par liaison de matière par l'intermédiaire d'une liaison soudée (20) dans une disposition en rangée (26), **caractérisé en ce que** les liaisons soudées (20) de la disposition en rangée (26) augmentent dans leur profondeur de l'extérieur vers l'intérieur le long de l'étendue longitudinale des pièces conductrices (10).
